# EUROPEAN PATENT SPECIFICATION

(11) **EP 1 111 592 B1**
(45) Date of publication and mention of the grant of the patent: **09.07.2003**
(21) Application number: 99125561.3
(22) Date of filing: 21.12.1999
(51) Int. Cl.: G11B 5/48

(54) **Magnetic recording device**
Magnetiches Aufnahmegerät
Appareil d'enregistrement magnétique

(43) Date of publication of application: 27.06.2001
(73) Proprietor: Mitsumi Electric Co., Ltd., Chofu-shi, Tokyo (JP)
(72) Inventor: Osaka, Tomohiko, c/o Yamagata Mitsumi Co.,Ltd., Yamagata-shi, Yamagata (JP)
(74) Representative: Grünecker, Kinkeldey, Stockmair & Schwanhäusser Anwaltssozietät

(56) References cited:
- PATENT ABSTRACTS OF JAPAN vol. 011, no. 153 (P-577), 19 May 1987 (1987-05-19) & JP 61 287087 A (HITACHI LTD), 17 December 1986 (1986-12-17)
- PATENT ABSTRACTS OF JAPAN vol. 015, no. 091 (P-1175), 5 March 1991 (1991-03-05) & JP 02 306418 A (TDK CORP), 19 December 1990 (1990-12-19)
- PATENT ABSTRACTS OF JAPAN vol. 016, no. 436 (P-1419), 11 September 1992 (1992-09-11) & JP 04 149816 A (TEAC CORP), 22 May 1992 (1992-05-22)
- PATENT ABSTRACTS OF JAPAN vol. 1998, no. 01, 30 January 1998 (1998-01-30) & JP 09 231537 A (MITSUMI ELECTRIC CO LTD), 5 September 1997 (1997-09-05)
- PATENT ABSTRACTS OF JAPAN vol. 016, no. 266 (P-1371), 16 June 1992 (1992-06-16) & JP 04 067372 A (NEC CORP), 3 March 1992 (1992-03-03)

## Description

### BACKGROUND OF THE INVENTION

The present invention relates to a magnetic recording device for a magnetic disk wherein the structure of a magnetic head assembly mounted on a gimbal is improved and the follow-up performance of a head is improved.

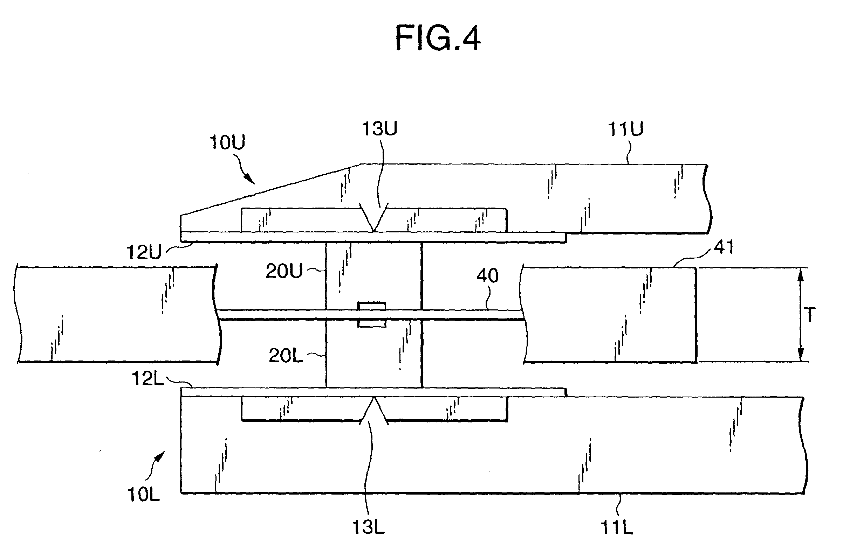

Fig. 4 is a partial side view showing an example of upper and lower magnetic heads 10U and 10L used in a double sides recorded type floppy disk drive (FDD). One magnetic head 10 is a part of a carriage 11 which is a carrier and supports the periphery of a gimbal 12. The center of the gimbal 12 is elastically coupled to the periphery. A magnetic head assembly 20 is elastically supported by the above center of the gimbal 12. The end of a pivot 13 is in contact with a reverse surface to the surface on which the magnetic head assembly 20 is mounted of the center of the gimbal 12. The pivot 13 is used for preventing regression in the direction of the carriage 11 without preventing the three-dimensional movement of the center of the gimbal 12. A reference number 40 denotes a floppy disk (FD) on the double sides of which data is recorded and 41 denotes a jacket with the thickness of T for housing FD 40.

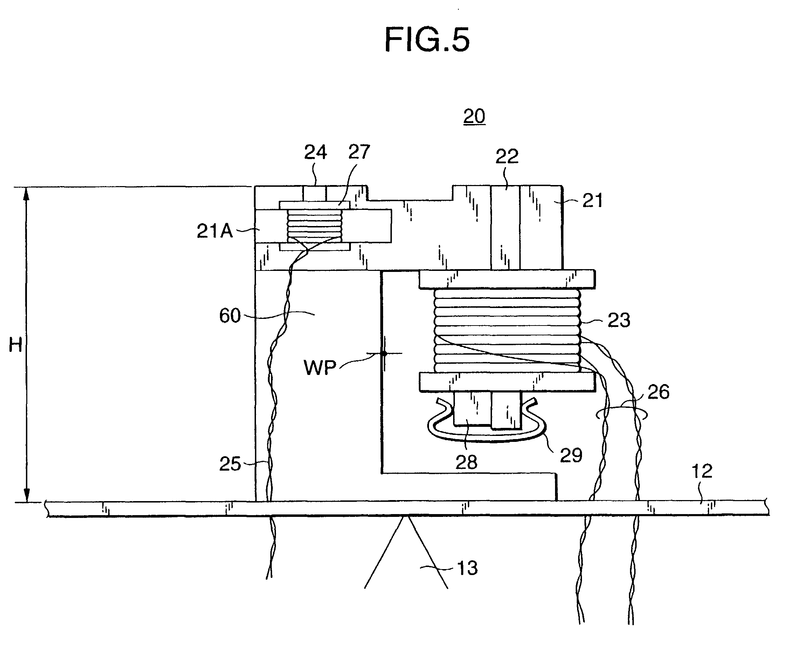

As enlarged in a side view in Fig. 5, the magnetic head assembly 20 is composed of a slider 21 having a surface slid on FD 40, a head core 22 fixed to the slider 21 and a driving coil 23 into which the leg portion of the head core 22 is inserted. In the driving coil 23, a coil for recording and reproducing and a coil for erasing are included.

As for FDD, correspondence to a low density record type of FD of 1 to 2 MB was a mainstream for a long time, however, recently, a function to enable correspondence to a high-density record type of FD of 100 MB is required. Low density FD the coercive force of which is 600 to 700 Oe (oersted) and the number of revolution of which is 300 rpm and high density FD the coercive force of which is 1500 Oe or more and the number of revolution of which is 3600 rpm are different in the type of a used magnetic head. A method of fixing a head for low density and a head for high density to one slider is adopted to mount both in one FDD.

In an example shown in Fig. 5, a reference number 22 denotes a head core for low density recording, 23 denotes its driving coil, 24 denotes a head core for high density recording and 27 denotes a driving coil wound on the head core for high density recording 24. The driving coil 27 is embedded in a concave portion 21A formed in the slider 21. The material of the slider 21 is generally ceramic. A gap for recording/reproduction and a gap for erasing are formed on each surface of the head cores 22 and 24. A back bar 28 is attached to the open end of the head core 22 for low density recording, both are fixed by a back bar clip 29 and forms a closed magnetic circuit.

In the structure of the related art shown in Fig. 5, the driving coil 23 is mounted on the side of the upper surface of the gimbal 12 together with the slider 21. Therefore, the slider 21 is mounted on a head base 60 and is supported in a position of height H apart from the surface of the gimbal 12. A wire 25 pulled out from the driving coil 27 and a wire 26 pulled out from the driving coil 23 are connected to a flexible printed circuit (FPC) (not shown) mounted on the carriage 11 through an opening formed in the gimbal 12.

The purpose of supporting the magnetic head assembly 20 by the gimbal 12 is to make the flat sliding surface of the slider 21 to follow the recorded face of FD because the recorded face of FD is not completely flat but has waviness. The closer to the end of the pivot 13 the center of gravity WP of the magnetic head assembly 20 supported by the gimbal 12 is, the satisfactory the follow-up performance becomes. However, as all the components of the related magnetic head assembly 20 shown in Fig. 5 are set on the side of one surface of the gimbal 12, the center of gravity is located apart from the end of the pivot 13.

Particularly, as the moment of inertia around the pivot 13 is large because the end of the pivot 13 is located outside the thickness T of the jacket 41 (for example, 3.3 mm), the head touch becomes worse when the runout of FD 40 or the like occurs. As a result, the variation of output is increased and a problem that a servo characteristic is deteriorated occurs. There is a defect that attention is required to be paid to clearance between each wire 25, 26 and the jacket 41 and foaming to avoid interference with the hole of the gimbal 12 requires manhour.

### SUMMARY OF THE INVENTION

The present invention is provided to solve the above problems. It is therefore an object of the present invention is to provide a magnetic recording device wherein the follow-up performance of a magnetic head for a magnetic disk is improved by improving the structure of a magnetic head assembly mounted on a gimbal.

In order to achive the above object, there is provided a magnetic recording head used for a magnetic disk according to claim 1.

The magnetic recording head may further comprises:
a carriage for supporting a peripheral portion of the gimbal; and
a shield ring surrounding the drive coil member for shielding the same magnetically.

Preferably, a back bar for forming a closed magnetic circuit is provided on the end portion of the first core on which the first drive coil is provided so as to face a side of that the second head core is provided.

Preferably, the gimbal includes a hole through which an electric wire drawn from the second drive coil is passed.

Preferably, the abutting point of the pivot member situates in the vicinity of a center of gravity of the recording head assembly.

According to the present invention, there is also provided a magnetic recording device used for a magnetic disk, wherein the above recording head is provided on each side of the magnetic disk.

Accordingly, as the structure of the magnetic head assembly mounted on the gimbal is improved, the magnetic recording device wherein the follow-up performance of the magnetic head for the magnetic disk is improved can be realized.

### BRIEF DESCRIPTION OF THE DRAWINGS

In the accompanying drawings:
Fig. 1 is a side view showing the main part of an embodiment of a magnetic recording device according to the present invention;
Fig. 2 is a perspective view showing the whole magnetic recording device shown in Fig. 1;
Fig. 3 is a side view showing an applied example of the present invention applied to a magnetic recording device for recording on double sides;
Fig. 4 is a side view showing an example of a related magnetic recording device for recording on double sides; and
Fig. 5 is a side view showing the enlarged one of the magnetic head shown in Fig. 4.

### DETAILED DESCRIPTION OF THE PREFERRED EMBODIMENT

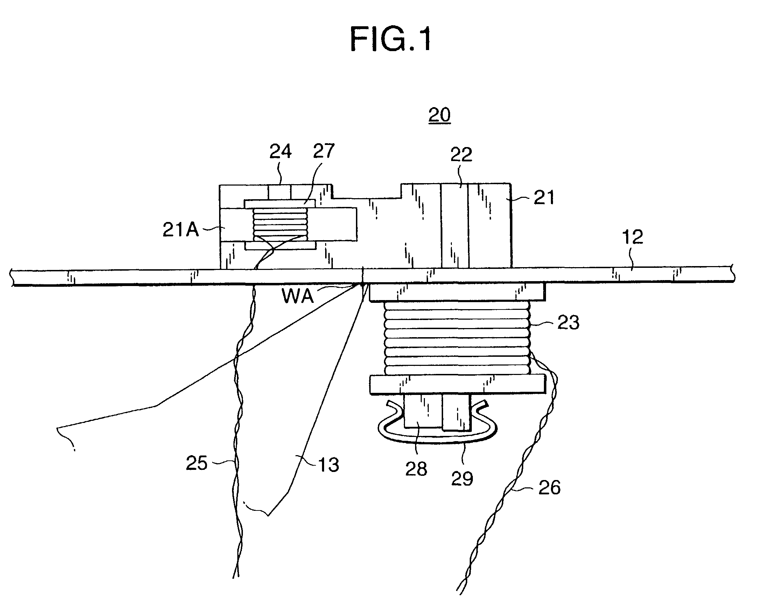

Referring to an embodiment shown in the drawings, the present invention will be described in detail below. Fig. 1 is a side view showing the main part of an embodiment of a magnetic recording device according to the present invention. As shown in Fig. 1, a reference number 12 denotes a gimbal for elastically supporting a magnetic head assembly 20. According to the present invention, a slider 20 of the magnetic head assembly 20 is mounted on one surface of the gimbal 12, while a driving coil 23 wound on a head core 22 fixed to the slider 21 is mounted on the other side of the gimbal 12.

The head base (60 in Fig. 5) that supports the slider 21 is not required by the above change of the structure and the magnetic head assembly 20 is lightened by the quantity. The above lightening is convenient to improve the follow-up performance of a head. In addition, the center of gravity of the magnetic head assembly 20 approaches the end of a pivot 13. According to suitable design, the above center of gravity can be approximately equalized to a position in which the end of the pivot 13 is touched.

In this case, when a back bar 28 is provided on a side face of a core for low density recording 22, which faces a coil for high density recording 27, the center of gravity is easy to set it to a position of the end of the pivot 13, that is, the center in the center of the gimbal 12. As a driving coil for low density recording 23 is arranged on the lower surface of the gimbal 12, an opening for passing its wire 26 is not required to be formed inside the gimbal 12. Only an opening for passing the wire of the driving coil for high density recording 27 arranged over the upper surface of the gimbal 12 has only to be formed inside the gimbal 12.

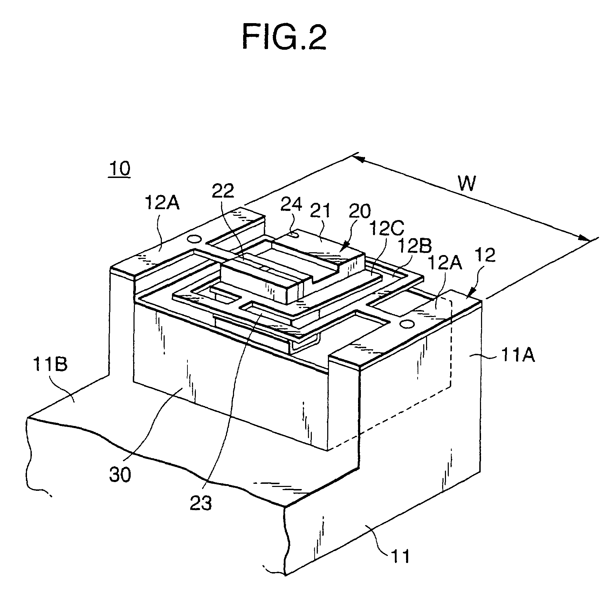

Fig. 2 is a perspective view showing the whole magnetic recording device shown in Fig. 1. In a magnetic head 10 shown in Fig. 2, the magnetic head assembly 20 is supported by the center 12C of the gimbal 12. The periphery 12A of the gimbal 12 is fixed to the head of a pair of walls 11A stood from the side of the carriage 11. A shield ring 30 for magnetically shielding the periphery of the driving coil 23 of the magnetic head assembly 20 is fixed to a flat part 11 B of the carriage 11 in a state in which the shield ring is structurally separated from the magnetic head assembly 20 and the gimbal 12. According to the above structure, the weight of the head which the gimbal 12 supports is reduced without reducing the effect of shielding by the shield ring 30 and the follow-up performance of the head is improved.

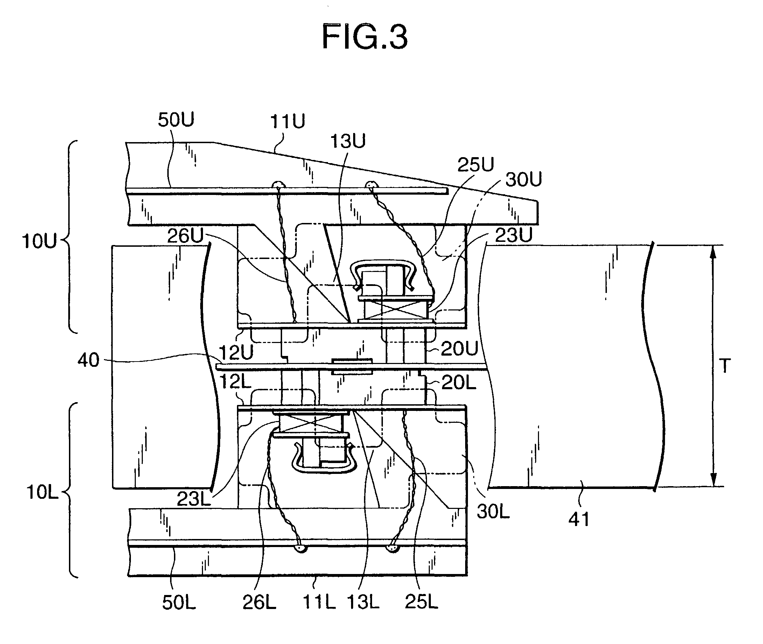

Fig. 3 is a side view in a case where the magnetic recording device shown in Fig. 1 is applied to a recording device for recording on double sides. In the above recording device for recording on double sides, a magnetic head on the upper side 10U and a magnetic head on the lower side 10L are opposed in a state in which they are respectively touched to both sides of FD 40 of a type for recording on double sides. A reference number 41 denotes a jacket of thickness T housing FD 40. U or L is added to each part composing the upper and lower magnetic heads 10U and 10L after each reference number for distinction.

Upper and lower carriages 11U and 11L house each flexible printed circuit (FPC) 50U, 50L and wires 25U and 25L respectively from the driving coils for low density recording 23U and 23L and wires 26U and 26L respectively from the coils for high density recording not shown are respectively connected to the flexible printed circuits. The magnetic head assemblies 20U and 20L are respectively mounted on the gimbals 12U and 12L. The gimbals 12U and 12L are respectively fixed to the carriages 11U and 11L or are respectively fixed to the shield rings 30U and 30L. The respective backs of the gimbals 12U and 12L are supported by pivots 13U and 13L respectively protruded from the carriages 11U and 11L.

According to the above magnetic head 10 according to the present invention, the following advantages are acquired. (1) As the end of each pivot 13 of the upper and lower heads is located in the thickness T of the jacket 41 and the center of gravity of the head can be coincident with the end of the pivot 13, the weight of the head can be reduced and the moment of inertia around the pivot 13 can be greatly reduced. Therefore, even if large waviness is caused on FD 40, the head can momentarily follow FD and a servo characteristic can be stabilized. (2) As only the wire of the coil for high density recording passes the opening of the gimbal 12, there is an advantage that manhour is reduced. (3) As the height of the head can be reduced and the head has structure smaller than a window of the FD jacket, a risk that the wire is touched to the jacket is removed. (4) As the head base can be removed, the magnetic recording device can be manufactured at a low price.

## Claims

1. A magnetic recording head used for a magnetic disk, comprising:
a recording head assembly (20) including:
a slider member (20) having a surface to be slid on a surface of the recording disk (40);
a head core member (22,24) secured to the slider member (20) such that one end portion of which forms a recording surface together with the slide surface of the slider (20); and
a drive coil member (23,27) provided on the other end portion of the head core member (22,24);
a plate-like gimbal (12) for supporting the recording head assembly (20) in a center portion thereof such that the slider member (20) is arranged in the side of a first face thereof and the drive coil member (23,27) is arranged in the side of a second face thereof; and
a pivot member (13) abutting against the center portion of the second face of the gimbal (12), wherein the head core member (22,24) includes a first head core (22) used for a low density recording and
wherein the coil member (23,27) includes a first drive coil (23) provided on an end portion of the first head core (22)
**characterised in that** the head core member (23, 24) further includes a second head core (24) used for a high density recording, and the coil member (23, 27) includes a second drive coil (27) provided on an end portion of the second head core (24), and
the first drive coil (23) and the second drive coil (27) are provided on opposite sides of the plate-like gimbal (12).

2. The magnetic recording head as set forth in claim 1, further comprising:
a carriage for supporting a peripheral portion (12A) of the gimbal (12); and a shield ring (30) surrounding the drive coil member (23,27) for shielding the same magnetically.

3. The magnetic recording head as set forth in claim 1, wherein a back bar (28) for forming a closed magnetic circuit is provided on the end portion of the first core (22) on which the first drive coil (23) is provided so as to face a side of that the second head core (24) is provided.

4. The magnetic recording head as set forth in claim 1, wherein the gimbal (12) includes a hole through which an electric wire (25) drawn from the second drive coil (27) is passed.

5. The magnetic recording head as set forth in any of claims 1 to 4, wherein the abutting point (WP) of the pivot member (13) is situated in the vicinity of a center of gravity of the recording head assembly.

6. A magnetic recording device used for a magnetic disk, wherein the recording head as set forth in any of claims 1 to 5 is provided on each side of the magnetic disk (40).

## Patentansprüche

1. Magnetaufzeichnungskopf, der für eine Magnetplatte eingesetzt wird und umfasst:
eine Aufzeichnungskopfbaugruppe (20), die enthält:
ein Gleiterelement (20) mit einer Fläche, die gleitend auf einer Fläche der Aufzeichnungsplatte (40) zu bewegen ist;
ein Kopfkemelement (22, 24), das an dem Gleiterelement (20) so befestigt ist, dass ein Endabschnitt desselben zusammen mit der Gleitfläche des Gleiters (20) eine Aufzeichnungsfläche bildet; und
ein Antriebsspulenelement (23, 27), das an dem anderen Endabschnitt des Kopfkernelementes (22, 24) vorhanden ist;
einen plattenartiger Kardanbügel (12), der die Aufzeichnungskopfbaugruppe (20) in einem Mittelabschnitt derselben so trägt, dass das Gleiterelement (20) auf der Seite einer ersten Außenfläche desselben angeordnet ist und das Antriebsspulenelement (23, 27) an der Seite einer zweiten Außenfläche desselben angeordnet ist; und
ein Schwenkelement (13), das an dem Mittelabschnitt der zweiten Außenfläche des Kardanbügels (12) anliegt, wobei das Kopfkernelement (22, 24) einen ersten Kopfkern (22) enthält, der für ein Aufzeichnen mit niedriger Dichte eingesetzt wird, und wobei das Spulenelement (23, 27) eine erste Antriebsspule (23) enthält, die an einem Endabschnitt des ersten Kopfkerns (22) vorhanden ist, **dadurch gekennzeichnet, dass** das Kopfkernelement (23, 24) des Weiteren einen zweiten Kopfkern (24) enthält, der für ein Aufzeichnen mit hoher Dichte eingesetzt wird, und das Spulenelement (23, 27) eine zweite Antriebsspule (27) enthält, die an einem Endabschnitt des zweiten Kopfkerns (24) vorhanden ist, und
die erste Antriebspule (23) sowie die zweite Antriebsspule (27) an einander gegenüberliegenden Seiten des plattenartigen Kardanbügels (12) vorhanden sind.

2. Magnetaufzeichnungskopf nach Anspruch 1, der des Weiteren umfasst:
einen Schlitten, der einen Umfangsabschnitt (12A) des Kardanbügels (12) trägt;
und einen Abschirmring (30), der das Antriebsspulenelement (23, 27) umgibt, um es magnetisch abzuschirmen.

3. Magnetaufzeichnungskopf nach Anspruch 1, wobei ein Gegenstab (28) zum Ausbilden eines geschlossenen Magnetkreises an dem Endabschnitt des ersten Kerns (22), an dem die erste Antriebsspule (23) vorhanden ist, so vorhanden ist, dass er einer Seite zugewandt ist, an der der zweite Kopfkern (24) vorhanden ist.

4. Magnetaufzeichnungskopf nach Anspruch 1, wobei der Kardanbügel (12) ein Loch enthält, durch das ein elektrischer Draht (25), der aus der zweiten Antriebsspule (27) gezogen wird, hindurchgeführt wird.

5. Magnetaufzeichnungskopf nach einem der Ansprüche 1 bis 4, wobei sich der Anschlagpunkt (WP) des Schwenkelementes (13) in der Nähe eines Schwerpunktes der Aufzeichnungskopfbaugruppe befindet.

6. Magnetaufzeichnungsvorrichtung, die für eine Magnetplatte eingesetzt wird, wobei der Aufzeichnungskopf nach einem der Ansprüche 1 bis 5 an jeder Seite der Magnetplatte (40) vorhanden ist.

## Revendications

1. Tête d'enregistrement magnétique utilisée pour un disque magnétique, comprenant
un assemblage de tête d'enregistrement (20) incluant :
un élément de coulisseau (20) qui comporte une surface destinée à être coulissée sur une surface du disque d'enregistrement (40) ;
un élément de noyau de tête (22, 24) qui est fixé à l'élément de coulisseau (20) de telle sorte qu'une partie d'extrémité de celui-ci forme une surface d'enregistrement en association avec la surface de coulissement du coulisseau (20); et
un élément de bobine d'entraînement (23, 27) qui est prévu sur l'autre partie d'extrémité de l'élément de noyau de tête (22, 24) ;
un cardan en forme de plaque (12) pour supporter l'assemblage de tête d'enregistrement (20) dans sa partie centrale de telle sorte que l'élément de coulisseau (20) soit agencé dans le côté de sa première face et que l'élément de bobine d'entraînement (23, 27) soit agencé dans le côté de sa seconde face ; et
un élément de pivot (13) qui vient en butée contre la partie centrale de la seconde face du cardan (12) où l'élément de noyau de tête (22, 24) inclut un premier noyau de tête (22) qui est utilisé pour un enregistrement faible densité; et
dans lequel:
l'élément de bobine (23, 27) inclut une première bobine d'entraînement (23) qui est prévue sur une partie d'extrémité du premier noyau de tête (22),
**caractérisé en ce que** :
l'élément de noyau de tête (23, 24) inclut en outre un second noyau de tête (24) qui est utilisé pour un enregistrement haute densité, et l'élément de bobine (23, 27) inclut une seconde bobine d'entraînement (27) qui est prévue sur une partie d'extrémité du second noyau de tête (24) ; et
la première bobine d'entraînement (23) et la seconde bobine d'entraînement (27) sont prévues sur des côtés opposés du cardan en forme de plaque (12).

2. Tête d'enregistrement magnétique selon la revendication 1, comprenant en outre :
un chariot pour supporter une partie périphérique (12A) du cardan (12) ; et
une bague de blindage (30) qui entoure l'élément de bobine d'entraînement (23, 27) pour le blinder magnétiquement.

3. Tête d'enregistrement magnétique selon la revendication 1, dans laquelle une barre arrière (28) pour former un circuit magnétique fermé est prévue sur la partie d'extrémité du premier noyau (22) où la première bobine d'entraînement (23) est prévue de manière à faire face à un côté de ce second noyau de tête (24).

4. Tête d'enregistrement magnétique selon la revendication 1, dans laquelle le cardan (12) inclut un trou au travers duquel un fil électrique (25) qui est tiré depuis la seconde bobine d'entraînement (27) est passé.

5. Tête d'enregistrement magnétique selon l'une quelconque des revendications 1 à 4, dans laquelle le point de butée (WP) de l'élément de pivot (13) est situé au voisinage d'un centre de gravité de l'assemblage de tête d'enregistrement.

6. Dispositif d'enregistrement magnétique utilisé pour un disque magnétique dans lequel la tête d'enregistrement selon l'une quelconque des revendications 1 à 5 est prévue sur chaque côté du disque magnétique (40).
